## Europäisches Patentamt
## European Patent Office
## Office européen des brevets

(19)

(11) Veröffentlichungsnummer: **0 035 067**
**B1**

(12) **EUROPÄISCHE PATENTSCHRIFT**

(45) Veröffentlichungstag der Patentschrift:
**07.03.84**

(51) Int. Cl.³: **H 04 M 19/08**

(21) Anmeldenummer: **80108202.5**

(22) Anmeldetag: **24.12.80**

(54) **Anordnung zur Speisung einer Teilnehmereinrichtung.**

(30) Priorität: **28.02.80 DE 3007468**
**28.02.80 DE 3007549**

(43) Veröffentlichungstag der Anmeldung:
**09.09.81 Patentblatt 81/36**

(45) Bekanntmachung des Hinweises auf die Patenterteilung:
**07.03.84 Patentblatt 84/10**

(84) Benannte Vertragsstaaten:
**AT BE CH DE FR GB IT LI LU NL SE**

(56) Entgegenhaltungen:
**DE - B - 1 299 737**
**DE - B - 2 541 053**
**FR - A - 1 358 909**

(73) Patentinhaber: **ANT Nachrichtentechnik GmbH,**
**Gerberstrasse 33, D-7150 Backnang (DE)**

(72) Erfinder: **Scheffler, Hartmut, Ing.-grad., Kantstrasse 11,**
**D-7152 Aspach (DE)**
Erfinder: **Ruff, Günter Wolfgang, Dipl.-Ing.,**
**Drosselweg 15, D-7151 Auenwald (SE)**

(74) Vertreter: **Schickle, Gerhard, Dipl.-Ing. et al, ANT**
**Nachrichtentechnik GmbH Patent- und Lizenzabteilung**
**Gerberstrasse 33, D-7150 Backnang (DE)**

## Anordnung zur Speisung einer Teilnehmereinrichtung

Die Erfindung betrifft eine Anordnung zur Speisung einer mittels einer Doppelleitung mit einer Vermittlungsstelle verbundenen, energiespeicherlosen Teilnehmereinrichtung aus der Amtsbatterie, wobei der Speisestromkreis durch Betätigung eines Schaltmittels in der Teilnehmereinrichtung im Falle einer Verbindung oder einer abgehenden Belegung geschlossen ist. Solche Teilnehmerspeiseanordnungen sind bekannt und bei analogen Vermittlungssystemen eingeführt.

Ein digitales Ortsnetz bzw. ein digitaler Teilnehmeranschluss verlangt jedoch die Verlagerung komplexer elektronischer Funktionen aus der Vermittlungsstelle zum Teilnehmer hin. Viele dieser verlagerten elektronischen Funktionen müssen schon dann durchgeführt werden, wenn bei einer ankommenden Belegung der Teilnehmer noch nicht abgehoben hat. Zur Erfüllung dieser Funktionen ist jedenfalls eine Speisung erforderlich. Es wurde deshalb vorgeschlagen, die üblichen Teilnehmerspeiseanordnungen so umzurüsten, dass sie unabhängig vom Zustand der Teilnehmereinrichtung von der Amtsbatterie dauergespeist werden. Dies hat jedoch den Nachteil eines grossen Stromverbrauchs.

Durch die DE-AS Nr. 2541053 ist eine Schaltungsanordnung für von der Vermittlungsstelle abgesetzte Einrichtungen in Fernsprechwählanlagen bekanntgeworden, wobei Kondensatoren als örtliche Betriebsspannungsquellen dienen, die mittels Fernspeisung aufgeladen werden und deren Ladespannung überwacht wird. Bei Erreichen der vorgegebenen Ladespannung wird der Ladestromkreis in der abgesetzten Einrichtung unterbrochen, was durch einen vermittlungsseitigen Stromindikator erkannt wird und zur vermittlungsseitigen Abschaltung führt. Die französische Patentschrift Nr. 1358909 beschreibt eine abgesetzte Telefoneinrichtung mit Akkumulator, der von der zentralen Amtsbatterie geladen wird und dessen Ladespannung überwacht wird, wobei abgesetzt abgeschaltet wird, was amtsseitig erkannt wird und zur Abschaltung der Ladespannung und zur Anschaltung der Betriebsspeisespannung an die Verbindungsleitung führt.

Einrichtungen mit solchen ferngepufferten örtlichen Betriebsspannungsquellen haben den Nachteil eines grösseren Stromverbrauchs aufgrund der Verluste auf Leitungen und in den Betriebsspannungsquellen sowie den Nachteil, dass ein grosser Energiespeicher vorgesehen werden muss, damit in Zeiten hoher Verkehrsdichte ein Absinken der Spannung unter den Betriebswert und damit Betriebsausfall verhindert wird.

Es wurde deshalb auch schon vorgeschlagen, eine Speisung von der Teilnehmerstelle her über ein Netzgerät vorzunehmen und so dem Teilnehmer die Stromlast aufzubürden. Dies hat jedoch die Nachteile: 1) hohe Investitionskosten und 2) Abhängigkeit von Netzausfällen.

Die Erfindung hat sich deshalb zur Aufgabe gemacht, eine Teilnehmerspeiseanordnung der eingangs genannten Art anzugeben, bei der ohne grossen Aufwand eine Speisung unabhängig vom Betriebszustand der Teilnehmereinrichtung möglich ist und bei der trotzdem nur wenig Strom verbraucht wird.

Die Lösung erfolgt mit den im Patentanspruch 1 angegebenen Mitteln.

Durch die Erfindung werden die Vorteile erbracht, dass eine Speisung wie bisher von der Vermittlungsstelle aus erfolgen kann, dass diese Speisung auch dann erfolgen kann, wenn der Teilnehmer aufgelegt hat, und dass trotzdem kein unnötig hoher und im Falle der Nichtbelegung gar kein Stromverbrauch stattfindet.

Die Erfindung geht von der Idee aus, im Ruhezustand die Doppelleitung von der speisenden Amtsbatterie abzuschalten bzw. an andere Potentiale anzuschalten, derart dass in diesem Zustand kein Strom verbraucht wird. Um der Forderung, den Betrieb sowohl in ankommender als auch in abgehender Richtung zu ermöglichen, nachzukommen, muss sich die Teilnehmerspeisung sowohl von der Vermittlungsstelle aus als auch von der Teilnehmerseite aus einschalten lassen. Wie dies erfindungsgemäss realisiert ist, zeigt die nun folgende Beschreibung anhand der Figuren.

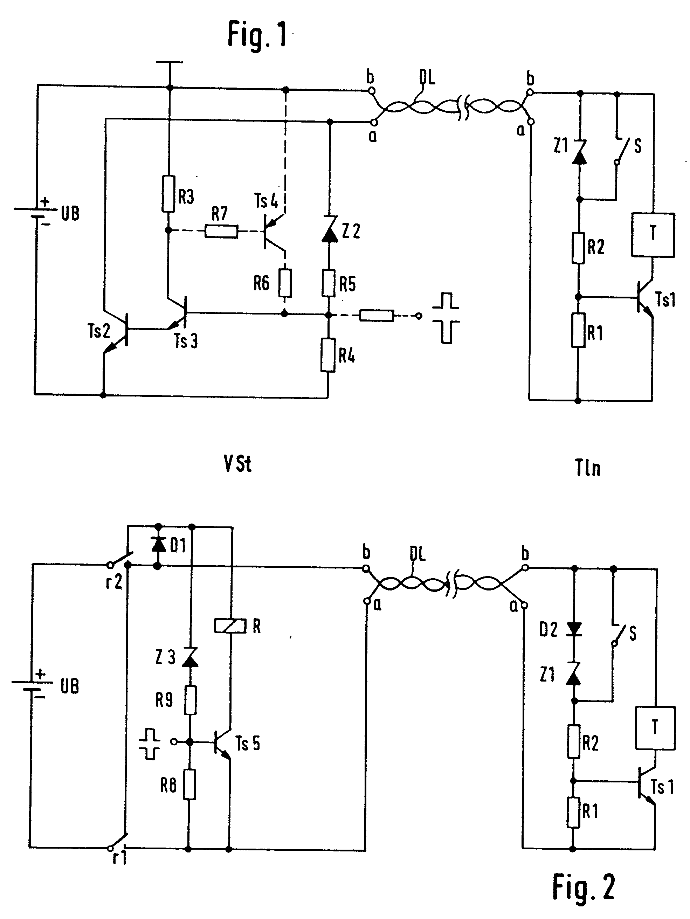

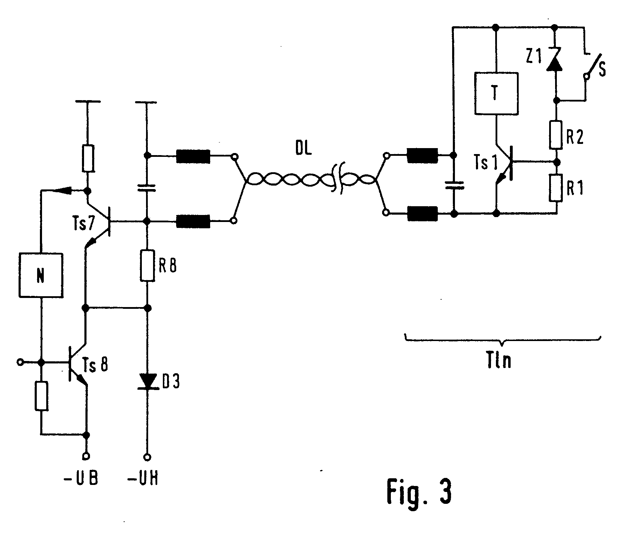

Die Fig. 1 stellt eine besonders vorteilhafte Ausgestaltung der Erfindung nach den Ansprüchen 2 bis 6 dar. Auf der Vermittlungsstellenseite VSt ist zwischen der Amtsbatterie UB und der Doppelleitung DL mit den Adern a und b eine erste, amtsseitige Schalteinrichtung und auf der Teilnehmerseite Tln zwischen der Doppelleitung DL und der zu speisenden Teilnehmereinrichtung T eine zweite, teilnehmerseitige Schalteinrichtung eingefügt. Die erste amtsseitige Schalteinrichtung enthält einen Schalttransistor Ts2, durch den der negative Pol der Amtsbatterie UB von der einen Leitung a abschaltbar ist, während der positive Pol fest mit der anderen Leitung b verbunden ist. Der Schalttransistor Ts2 ist an seiner Basis über einen weiteren Schalttransistor Ts3, dessen Kollektor über einen Widerstand R3 mit dem positiven Pol der Amtsbatterie verbunden ist, ansteuerbar. Die Basis-Elektrode des letzteren ist einerseits über einen Widerstand R4 mit dem negativen Pol der Amtsbatterie und über einen Widerstand R5 mit einer Zenerdiode Z2 mit der Leitung a verbunden. Auf der Teilnehmerseite enthält die Schalteinrichtung eine Zenerdiode Z1, einen Widerstand R1 und einen Widerstand R2, die in Reihe zwischen der Leitung b und der Leitung a liegen. Parallel zum Widerstand R1 ist die Basis-Emitter-Strecke eines Schalttransistors Ts1 geschaltet, dessen Emitter-Elektrode mit der Leitung a verbunden ist und dessen Kollektor über die zu speisende Teilnehmereinrichtung T mit der anderen Leitung b verbunden ist. Parallel zur Zenerdiode Z1 liegt ein Schalter S. In Ruhestellung fliesst kein Strom, da beide Zenerdioden sperren. Wird auf der Teilnehmerseite der Schalter S betätigt, wobei die Zenerdiode Z1 kurzgeschlossen wird, so ist ein Stromkreis geschlossen, und zwar über den Weg positiver Pol der Amtsbatterie UB, Leitung b, Schalter S, Widerstand R2, Widerstand R1, Leitung a, Zenerdiode Z2, Widerstand R5, Widerstand R4, negativer Pol der Amtsbatterie UB, wobei vorausgesetzt ist, dass die Durchbruchspannung der Zenerdiode Z2 kleiner gleich dem minimalen Wert der Speisespannung UB ist. Amtsseitig wird aufgrund des Spannungsabfalls an Widerstand R4 der Schalttransistor Ts3 und damit auch der Schalttransistor Ts2 leitend, wodurch der negative Pol der Amtsbatterie an die eine Leitung a angeschaltet wird. Die Speisung der Teilnehmereinrichtung T erfolgt dadurch, dass der Transistorschalter Ts1 leitend gesteuert wird. Die teilnehmerseitige Speiseanschaltung hält sich dabei über die Zenerdiode Z1, deren Durchbruchspannung kleiner gleich der minimal vorkommenden Speisespannung an den teilnehmerseitigen Klemmen der Doppelleitung DL bei geöffnetem Schalter S gewählt ist. Auf der Vermittlungsstellenseite wird der Verbindungswunsch des Teilnehmers registriert und die Anschaltung der Speisung durch Schalttransistor Ts2 bleibt erhalten, beispielsweise indem ein weiterer Schaltertransistor Ts4, dessen Emitter-Elektrode mit dem Pluspol der Batterie und dessen Kollektor über einen Widerstand R6 den erforderlichen Basis-Ansteuerstrom für den Transistor Ts3 liefert und dessen Basis-Elektrode über einen Widerstand R7 vom Kollektor des Transistors Ts3 angesteuert wird. Auf diese Weise hält sich die Speiseanschaltung.

Bei Ende der Verbindung wird die Speiseanschaltung ausgelöst, indem beispielsweise ein negativer Impuls auf die Basis-Elektrode des Schalttransistors Ts3 gegeben wird, wodurch alle Schalttransistoren und Zenerdioden gesperrt werden.

Bei ankommender Belegung wird die Speiseanschaltung durch einen positiven Impuls auf die Basis-Elektrode des Schalttransistors Ts3 gegeben, wodurch Schalttransistor Ts2 die Amtsbatterie an die Doppelleitung schaltet und wobei der Schalttransistor Ts4, wie oben beschrieben, die Ansteuerung des Transistors Ts3 aufrechterhält, und wobei teilnehmerseits über die Zenerdiode Z1 der Schalttransistor Ts1 angesteuert wird, wodurch die Teilnehmereinrichtung T wiederum an die Speisung angeschaltet wird.

Die Fig. 2 zeigt ein anderes Ausführungsbeispiel der Erfindung, wobei die speisende Amtsbatterie in der Ruhestellung umgepolt an die Doppelleitung DL geschaltet wird. Dies erfolgt über Relaisumschaltekontakte r1 bzw. r2. Die amtsseitige Schalteeinrichtung, die hier aus der Reihenschaltung einer Zenerdiode Z3, eines Widerstandes R9 und eines Widerstandes R8 besteht, wobei parallel zum Widerstand R8 die Basis-Emitter-Strecke eines Schalttransistors Ts5 liegt, dessen Emitter mit der Leitung a verbunden ist und dessen Kollektor über ein Relais R mit der Kathode der Zenerdiode Z3 verbunden ist, ist zwischen der einen Leitung a und dem positiven Pol der Amtsbatterie eingefügt, während der negative Pol an die andere Leitung b angeschaltet ist. Die Schalteinrichtung auf der Teilnehmerseite entspricht derjenigen nach Fig. 1, wobei lediglich eine Diode D2 zwischen der anderen Leitung b und der Zenerdiode Z1 eingefügt ist. Im Ruhefall fliesst kein Strom, da sowohl die Zenerdiode Z1 als auch die Zenerdiode Z3 gesperrt ist. Bei einem Verbindungswunsch des Teilnehmers wird der Schalter S betätigt, wodurch die Reihenschaltung der Diode D2 mit der Zenerdiode Z1 kurzgeschlossen wird und sich ein Stromkreis vom positiven Pol der Amtsbatterie über zweiten Umschaltekontakt r2, Zenerdiode Z3, Widerstände R9, R8, Leitung a, Widerstände R1, R2, Schalter S, Leitung b, ersten Umschaltekontakt r1, negativer Pol der Amtsbatterie schliessen kann, da die Speisespannung der Amtsbatterie die Durchbruchspannung der Zenerdiode Z3 überschreitet. Dadurch wird der Transistor Ts5 angesteuert, wodurch das Relais R zum Anzug kommt und über die Umschaltekontakte r1 und r2 die volle Speisespannung an die Doppelleitung DL gelegt wird. Über die Diode D1, die den zweiten Umschaltekontakt r2 überbrückt, wird weiterhin Ansteuerstrom für den Transistor Ts5 herangeführt, wodurch das Relais R in seiner Arbeitslage verbleibt. Auf der Teilnehmerseite wird, wie bei Fig. 1 beschrieben, die Teilnehmereinrichtung T an die speisende Spannung über den Transistor Ts1 angeschaltet. Wird die Verbindung beendet, so wird an die Basis-Elektrode des Transistors Ts5 ein negativer Impuls gegeben, wodurch letzterer gesperrt wird, das Relais R in seine Ruhelage zurückkehrt und die erste Schalteinrichtung in Serie zwischen der einen Leitung a und dem positiven Pol der Amtsbatterie schaltet. Auf der Teilnehmerseite wird der Schalttransistor Ts1 gesperrt. Da die Diode D2 nun ebenfalls in Sperrichtung liegt, kann durch die Zenerdiode Z1 kein inverser Durchlassstrom fliessen, der Stromkreis ist geöffnet. Zur Vermeidung eines eventuellen inversen Betriebes des Schalttransistors Ts1 ist zwischen ihm und der Leitung b eine Diode einzufügen.

Bei ankommender Belegung wird die erste Schalteinrichtung amtsseitig betätigt, indem beispielsweise ein positiver Impuls auf die Basis-Elektrode des Schalttransistors Ts5 gegeben wird, wodurch die speisende Amtsbatterie richtig gepolt an die Doppelleitung DL angeschaltet wird und wobei dann teilnehmerseitig, wie oben beschrieben, die Anschaltung der Teilnehmereinrichtung an die Speisung erfolgt, indem Diode D2, Zenerdiode Z1 und damit auch der Schalttransistor Ts1 leitend gesteuert werden.

Selbstverständlich bleibt die erfindungsgemässe Speiseschaltung nicht beschränkt auf die Abschaltung bzw. Umpolung der Speisespannung, sondern es können auch Anschaltungen bzw. Umschaltungen der Doppelleitung DL an Anzapfungen der Amtsbatterie oder an eine Hilfsspannung erfolgen.

Die Fig. 3 illustriert den letzteren Fall, wobei eine Hilfsspannung UH über eine Entkopplungsdiode D3 an die amtsseitigen Enden der Doppelleitung DL gelegt ist. Die Hilfsspannung ist derartig klein gewählt gegenüber der Batteriespannung UB und der Durchbruchspannung der Zenerdiode Z1 des

teilnehmerseitigen Schwellwertschalters, dass im Ruhezustand kein Strom fliesst. Fliesst jedoch ein Strom aufgrund einer teilnehmerseitigen Einschaltung, so wird dies amtsseitig erkannt und die Batteriespannung an die Doppelschaltung der Batteriespannung an die Doppelleitung eine teilnehmerseitige Einschaltung der Speisung.

Auf Seiten der Vermittlungsstelle ist an die eine Ader der Doppelleitung DL, deren andere Ader geerdet ist, über einen Widerstand R8 und die Entkopplungsdiode D3 der Minuspol der Hilfsspannung UH angeschlossen. Der Verbindungspunkt zwischen Widerstand R8 und Entkopplungsdiode D3 ist über einen elektronischen Schalter Ts8 mit dem Minuspol der Amtsbatterie UB verbunden. Der elektronische Schalter Ts8 ist über ein Netzwerk N, das an seiner Basis angeschlossen ist, durch einen Transistorschalter Ts7, dessen Basis und Emitter-Elektrode parallel zum Widerstand R8 liegen, ansteuerbar. Auf der Teilnehmerseite ist die zu speisende Last T über einen Transistorschalter Ts1 an die teilnehmerseitigen Enden der Doppelleitung DL angeschlossen. Parallel dazu liegt weiterhin die Zenerdiode Z1 in Reihe mit einem Widerstand R2, dessen anderes Ende mit der Basis des Transistorschalters Ts1 verbunden ist.

Im Ruhezustand ist der Transistorschalter Ts8 auf der Vermittlungsseite gesperrt, so dass nur die Hilfsspannung über Gleichrichter D3 und Widerstand R8 auf die Doppelleitung DL wirkt. Es fliesst jedoch kein Strom, da auf der Teilnehmerseite die Zenerdiode Z1 nichtleitend gesteuert ist, da ihre Durchbruchspannung grösser als die Hilfsspannung UH ist und somit der Transistorschalter Ts1 nicht angesteuert wird. Bei ankommender Belegung wird die Amtsbatterie UB über den Schalter Ts8 und Widerstand R8 an die Doppelleitung gelegt. Da die Durchbruchspannung der Zenerdiode Z1 kleiner als die Amtsbatteriespeisespannung UB ist, wird der Transistorschalter Ts1 über Widerstand R2 angesteuert, wodurch die Speiselast T direkt an die Doppelleitung gelegt wird und somit die Teilnehmereinrichtung aktiviert ist.

Zur abgehenden Belegung vom Teilnehmer zur Vermittlungsstelle wird ein Schalter S, der parallel zur Zenerdiode Z1 liegt, betätigt. Durch die anliegende Hilfsspannung UH wird der Transistorschalter Ts1 über Widerstand R2 leitend gesteuert, wodurch die Speiselast T direkt an die Doppelleitung angeschaltet wird. Es fliesst nun ein Strom, der in der Vermittlungsstellenspeiseschaltung am Widerstand R8 einen Spannungsabfall hervorruft, wodurch der Transistor Ts7 und damit auch der Schaltertransistor Ts8 leitend gesteuert werden und damit die speisende Amtsbatterie UB an die Doppelleitung gelegt wird.

Beim Gesprächsabbau Teilnehmer-Vermittlungsstelle legt der Teilnehmer auf und öffnet damit den Schalter S. Die Speiseschaltung in der Vermittlungsstelle bleibt jedoch eingeschaltet, wodurch auch die Teilnehmerschaltung weiterhin im aktiven Zustand verbleibt. Durch entsprechende Kennzeichengabe im Nutzsignal wird das Gesprächsende des Teilnehmers der Vermittlungsstelle signalisiert. Daraufhin wird amtsseitig der Transistorschalter Ts8 gesperrt, wodurch die Amtsbatterie abgeschaltet wird und nur noch die Hilfsspannung UH wirkt. Da jedoch die Durchbruchspannung der Zenerdiode Z1 grösser als die Hilfsspannung UH ist, wird der Transistorschalter Ts1 gesperrt, wodurch die Leitung stromlos wird.

**Patentansprüche**

1. Anordnung zur Speisung einer mittels einer Doppelleitung (DL) mit einer Vermittlungsstelle verbundenen, energiespeicherlosen Teilnehmereinrichtung (T) aus der Amtsbatterie (UB), wobei der Speisestromkreis durch Betätigung eines Schaltmittels in der Teilnehmereinrichtung (T) im Falle einer Verbindung oder einer abgehenden Belegung geschlossen ist, dadurch gekennzeichnet, dass zwischen Doppelleitung (DL) und Amtsbatterie (UB) einerseits und zwischen Doppelleitung (DL) und Teilnehmereinrichtung (T) andererseits eine amts- bzw. eine teilnehmerseitige Schalteinrichtung, die auf Über- oder Unterschreitung von Strom- oder Spannungsschwellen ansprechen, eingefügt sind, dass die Doppelleitung (DL) von der Amtsbatterie (UB) abschaltbar bzw. auf andere Potentiale umschaltbar ist, dass die Ab- bzw. Umschaltung der Doppelleitung (DL) bei ihrer Nichtbelegung erfolgt, dass die amtsseitige Schalteinrichtung ein Schwellwertschalter ist, der bei Betätigung des teilnehmerseitigen Schaltmittels (S) anspricht, wodurch die Ab- bzw. Umschaltung der Doppelleitung (DL) aufgehoben wird und dass die teilnehmerseitige Schalteinrichtung ein Schwellwertschalter ist, der bei Aufhebung der Ab- bzw. Umschaltung der Doppelleitung (DL) anspricht, wodurch der Speisestromkreis geschlossen wird.

2. Anordnung nach Anspruch 1, dadurch gekennzeichnet, dass der teilnehmerseitige Schwellwertschalter, dessen Eingänge an die Doppelleitung (DL) angeschlossen sind, einen Schalttransistor (Ts1) enthält, dessen Emitter-Kollektor-Strecke in Serie mit der zu speisenden Teilnehmereinrichtung (T) zwischen den beiden Leitungsenden (a, b) liegt und dessen Basis über die Reihenschaltung einer Zenerdiode (Z1) und eines Widerstandes (R2) von einer (b) der beiden Leitungen ansteuerbar ist und dass parallel zur Zenerdiode (Z1) das Schaltmittel (S) liegt (Fig. 1).

3. Anordnung nach Anspruch 1 oder 2, dadurch gekennzeichnet, dass der amtsseitige Schwellwertschalter einen Schalttransistor (Ts2) enthält, dessen Kollektor-Emitter-Strecke zwischen der einen Klemme (a) und dem einen Pol (−) der Amtsbatterie (UB) liegt und dessen Basis-Elektrode mit einer der beiden Klemmen (a) der Doppelleitung (DL) verbindbar ist (Fig. 1).

4. Anordnung nach Anspruch 3, dadurch gekennzeichnet, dass im amtsseitigen Schwellwertschalter die Basis-Elektrode des Schalttransistors (Ts2) über eine Reihenschaltung aus einer Zenerdiode (Z2) und einem Widerstand (R5) mit der einen Leitung (a) verbunden ist.

5. Anordnung nach Anspruch 4, dadurch ge-

kennzeichnet, dass im amtsseitigen Schwellwert-schalter die Basis-Elektrode des Schalttransistors (Ts2) über die Emitter-Kollektor-Strecke eines weiteren Schalttransistors (Ts3), dessen Emitter-Basis-Strecke in Serie zur Reihenschaltung liegt, und einem dritten Widerstand (R3) von dem anderen Pol (+) der Amtsbatterie (UB) ansteuerbar ist.

6. Anordnung nach Anspruch 5, dadurch gekennzeichnet, dass im amtsseitigen Schwellwertschalter die Basis-Elektrode des weiteren Schalttransistors (Ts3) über einen Widerstand (R6) und die Kollektor-Emitter-Strecke eines weiteren Schalttransistors (Ts4) vom anderen Pol (+) der Amsbatterie (UB) ansteuerbar ist und dass über die Kollektor-Emitter-Strecke des Schalttransistors (Ts3) und über einen Widerstand (R7) die Basis des Schalttransistors (Ts4) ansteuerbar ist (Fig. 1, gestrichelt).

7. Anordnung nach einem der beiden Ansprüche 1 oder 2, dadurch gekennzeichnet, dass der Eingangskreis des teilnehmerseitigen Schwell-wertschalters in Reihe zwischen der einen Klemme der Doppelleitung (DL) und einer mit dem einen Pol einer Hilfsspannung (UH) verbundenen Entkopplungsdiode (Gr1) geschaltet ist und einen Widerstand (R8) enthält, zu dem parallel die Eingänge eines Transistors (Ts7) liegen, über dessen Ausgang ein elektronischer Schalter (Ts8) über ein Netzwerk (N) ansteuerbar ist (Fig. 3).

8. Anordnung nach Anspruch 2, dadurch gekennzeichnet, dass amtsseitig der eine Pol (−) der Amtsbatterie (UB) über einen ersten Umschaltekontakt (r1) an die eine Leitung (a) bzw. an die andere Leitung (b) und der andere Pol (+) der Amtsbatterie (UB) über einen zweiten Umschaltekontakt (r2) an die andere Leitung (b) bzw. an die erste Elektrode einer ersten Diode (D1), deren zweite Elektrode mit der anderen Leitung (b) verbunden ist, anschaltbar sind, dass zwischen der ersten Elektrode der ersten Diode (D1) und der einen Leitung (a) die Reihenschaltung eines die Umschaltekontakte (r1, r2) betätigenden Relais (R) mit der Kollektor-Emitter-Strecke eines Schalttransistors (Ts5) liegt, dass die Basis-Elektrode dieses Schalttransistors über eine Reihenschaltung aus einer Zenerdiode (Z3) und einem Widerstand (R8) mit einer (b) der Leitungen verbunden ist und dass teilnehmerseitig in Reihe zur Zenerdiode (Z1) eine Diode (D2) geschaltet ist (Fig. 2).

**Revendications**

1. Installation pour l'alimentation par la batterie centrale (UB) et à l'aide d'une ligne métallique (DL) d'un dispositif d'abonné (T) ne comportant pas d'accumulateur d'énergie et relié à un central, le circuit d'alimentation étant fermé par manœuvre d'un moyen de commutation du dispositif d'abonné (T) dans le cas d'une liaison ou d'un appel sortant, ladite installation étant caractérisée en ce qu'un dispositif de commutation, réagissant au dépassement dans un sens ou dans l'autre de seuils de courant ou de tension, est inséré du côté central et du côté abonné, entre la ligne métallique (DL) et la batterie centrale (UB), d'une part, et entre la ligne métallique (DL) et le dispositif d'abonné (T), d'autre part; la ligne métallique (DL) peut être déconnectée de la batterie centrale (UB) ou commutée sur d'autres potentiels; la ligne métallique (DL) est déconnectée ou commutée quand elle n'est pas occupée; le dispositif de commutation du côté central est un interrupteur à seuil, qui réagit à la manœuvre du moyen de commutation (S) du côté abonné, de sorte que la déconnexion ou la commutation de la ligne métallique (DL) est supprimée; et le dispositif de commutation du côté abonné est un interrupteur à seuil qui réagit, lors de la suppression de la déconnexion ou de la commutation de la ligne métallique (DL), de sorte que le circuit d'alimentation est fermé.

2. Installation selon la revendication 1, caractérisée en ce que l'interrupteur à seuil du côté abonné, dont les entrées sont reliées à la ligne métallique (DL), comprend un transistor de commutation (Ts1), dont le circuit émetteur-collecteur est en série avec le dispositif d'abonné (T) à alimenter, entre les deux extrémités de conducteur (a, b), et dont la base est attaquée par un (b) des deux conducteurs par l'intermédiaire du couplage en série d'une diode Zener (Z1) et d'une résistance (R2), et en ce que le moyen de commutation (S) est en parallèle avec la diode Zener (Z1) (fig. 1).

3. Installation selon l'une des revendications 1 ou 2, caractérisée en ce que l'interrupteur à seuil du côté central comprend un transistor de commutation (Ts2), dont le circuit collecteur-émetteur est inséré entre une borne (a) de la ligne métallique (DL) et la borne (−) de la batterie centrale (UB), et dont l'électrode de base est reliée à l'une (a) des deux bornes de la ligne métallique (DL) (fig. 1).

4. Installation selon la revendication 3, caractérisée en ce que, dans l'interrupteur à seuil du côté central, l'électrode de base du transistor de commutation (Ts2) est reliée à un conducteur (a) par le couplage en série d'une diode Zener (Z2) et d'une résistance (R5).

5. Installation selon la revendication 4, caractérisée en ce que, dans l'interrupteur à seuil du côté central, l'électrode de base du transistor de commutation (Ts2) est attaquée, par la seconde borne (+) de la batterie centrale (UB), par l'intermédiaire du circuit émetteur-collecteur d'un second transistor de commutation (Ts3), dont le circuit émetteur-base est en série avec le couplage en série, et d'une troisième résistance (R3).

6. Installation selon la revendication 5, caractérisée en ce que, dans l'interrupteur à seuil du côté central, l'électrode de base du second transistor de commutation (Ts3) est attaquée par la seconde borne (+) de la batterie centrale (UB) par l'intermédiaire d'une résistance (R6) et du circuit collecteur-émetteur d'un autre transistor de commutation (Ts4), et en ce que la base du transistor de commutation (Ts4) est attaquée par le circuit collecteur-émetteur du transistor de commutation (Ts3) et une résistance (R7) (en tireté sur la fig. 1).

7. Installation selon l'une des revendications 1 ou 2, caractérisée en ce que le circuit d'entrée de l'interrupteur à seuil du côté abonné est branché en série entre une borne de la ligne métallique (DL) et une diode de découplage (Gr1) reliée à une borne d'une tension auxiliaire (UH), et en ce qu'il contient une résistance (R8) en parallèle avec les entrées d'un transistor (Ts7), dont la sortie attaque un interrupteur électronique (Ts8) par l'intermédiaire d'un réseau (N) (fig. 3).

8. Installation selon la revendication 2, caractérisée en ce que, du côté central, une borne (−) de la batterie centrale (UB) est connectée par un premier contact inverseur (r1) à un conducteur (a) ou à l'autre conducteur (b), et la seconde borne (+) de la batterie centrale (UB) est connectée par un second contact inverseur (r2) au second conducteur (b) ou à la première électrode d'une première diode (D1), dont la seconde électrode est reliée au second conducteur (b); le couplage en série d'un relais (R), actionnant les contacts inverseurs (r1, r2), et du circuit collecteur-émetteur d'un transistor de commutation (Ts5) est branché entre la première électrode de la première diode (D1) et le premier conducteur (a); l'électrode de base dudit transistor (Ts5) est reliée à un (b) des conducteurs par le couplage en série d'une diode Zener (Z3) et d'une résistance (R8); et, du côté abonné, une diode (D2) est branchée en série avec la diode Zener (Z1) (fig. 2).

## Claims

1. Arrangement for feeding a subscriber equipment (T), which is devoid of energy store and connected by means of a two-wire line (DL) with an exchange, from the exchange battery (UB), wherein the feed-current circuit is closed in the case of a connection or an outgoing seizing through actuation of a switching means in the subscriber equipment (T), characterised thereby that a respective switching equipment, which responds to current or voltage thresholds being exceeded or fallen below, is inserted at the exchange side and at the subscriber side on the one hand between two-wire line (DL) and exchange battery (UB) and on the other hand between two-wire line (DL) and subscriber equipment (T), that the two-wire line (DL) is switchable off from the exchange battery (UB) or over to other potentials, that the switching-off or switching-over of the two-wire line (DL) takes place when it is not seized, that the switching equipment at the exchange side is a threshold discriminator which responds on actuation of the switching means (S) at the subscriber side, whereby the switching-off or switching-over of the two-wire line (DL) is cancelled and that the switching equipment at the subscriber side is a threshold discriminator which responds on cancellation of the switching-off or switching-over of the two-wire line (DL), whereby the feed-current circuit is closed.

2. Arrangement according to claim 1, characterised thereby that the threshold discriminator at the subscriber side has inputs connected to the two-wire line (DL) and contains a switching transistor (Ts1), the emitter-collector path of which lies in series with the subscriber equipment (T) to be fed between both the line ends (a, b), and the base of which is drivable from one (b) of both the lines through the series circuit of a Zener diode (Z1) and a resistor (R2), and that the switching means (S) lies parallel to the Zener diode (Z1) (Fig. 1).

3. Arrangement according to claim 1 or 2, characterised thereby that the threshold discriminator at the exchange side contains a switching transistor (Ts2), the emitter-collector path of which lies between the one terminal (a) and the one pole (−) of the exchange battery (UB), and the base electrode of which is connectable with one of both the terminals (a) of the two-wire line (DL) (Fig. 1).

4. Arrangement according to claim 3, characterised thereby that the base electrode of the switching transistor (Ts2) is connected in the threshold discriminator at the exchange side through a series circuit of a Zener diode (Z2) and a resistor (R5) with the one line (a).

5. Arrangement according to claim 4, characterised thereby that the base electrode of the switching transistor (Ts2) is drivable in the threshold discriminator at the exchange side through the emitter-collector path of a further switching transistor (Ts3), the emitter-base path of which lies in series with the series circuit, and a third resistor (R3) from the other pole (+) of the exchange battery (UB).

6. Arrangement according to claim 5, characterised thereby that the base electrode of the further switching transistor (Ts3) is drivable in the threshold discriminator at the exchange side through a resistor (R6) and the collector-emitter path of a further switching transistor (Ts4) from the other pole (+) of the exchange battery (UB) and that the base of the switching transistor (Ts4) is drivable through the collector-emitter path of the switching transistor (Ts3) and through a resistor (R7) (Fig. 1, in dashed lines).

7. Arrangement according to claim 1 or 2, characterised thereby that the input circuit of the threshold discriminator at the subscriber side is connected in series between the one terminal of the two-wire line (DL) and a decoupling diode (Gr1) connected with the one pole of an auxiliary voltage (UH) and contains a resistor (R8), in parallel with which lie the inputs of a transistor (Ts7), through the output of which an electronic switch (Ts8) is drivable through a network (N) (Fig. 3).

8. Arrangement according to claim 2, characterised thereby that the one pole (−) of the exchange battery (UB) is switchable at the exchange side through a first change-over contact (r1) either to the one line (a) or to the other line (b), and the other pole (+) of the exchange battery (UB) is switchable at the exchange side through a second change-over contact (r2) either to the other line (b) or to the first electrode of a first diode (D1), the second electrode of which is connected with the other line (b), the series circuit of a relay (R) actuating the change-over contacts (r1, r2) and the collector-emitter path of a switching transistor (Ts5) lies between the first electrode of the first diode (D1) and the one line (a); that the base electrode of this switching transistor is connected through a series circuit of a Zener diode (Z3) and a resistor (R8) with one (b) of the lines and that a diode (D2) is connected at the subscriber side in series with the Zener diode (Z1) (Fig. 2).

# Fig. 1

VSt

Tln

# Fig. 2

Fig. 3